# EUROPEAN PATENT SPECIFICATION

(11) **EP 3 536 508 B1**
(45) Date of publication and mention of the grant of the patent: **31.03.2021**
(21) Application number: 19159451.4
(22) Date of filing: 26.02.2019
(51) Int. Cl.: B01D 71/02, B01D 63/08, B41J 2/14, B41J 2/18, B41J 2/19, B01D 19/00

(54) **PRINTHEAD**
DRUCKKOPF
TÊTE D'IMPRESSION

(30) Priority: 06.03.2018 US 201815913778; 06.03.2018 US 201815913787
(43) Date of publication of application: 11.09.2019
(73) Proprietor: Ricoh Company, Ltd., Tokyo 143-8555 (JP)
(72) Inventor: NISHIMURA, Hiroshi, Simi Valley, CA 93065-1875 (US)
(74) Representative: J A Kemp LLP

(56) References cited:
- EP-A1- 3 121 011
- EP-A2- 0 594 110
- WO-A1-95/12109
- US-A1- 2006 103 699
- US-A1- 2008 252 707
- US-A1- 2010 073 433
- US-A1- 2011 205 306
- US-A1- 2013 233 418
- US-A1- 2014 300 666
- US-A1- 2017 368 835
- US-B1- 6 457 820

## Description

### FIELD OF THE INVENTION

The following disclosure relates to the field of image formation, and in particular, to printheads and the use of printheads.

### BACKGROUND

Image formation is a procedure whereby a digital image is recreated on a medium by propelling droplets of ink or another type of print fluid onto a medium, such as paper, plastic, a substrate for 3D printing, etc. Image formation is commonly employed in apparatuses, such as printers (e.g., inkjet printer), facsimile machines, copying machines, plotting machines, multifunction peripherals, etc. The core of a typical jetting apparatus or image forming apparatus is one or more liquid-droplet ejection heads (referred to generally herein as "printheads") having nozzles that discharge liquid droplets, a mechanism for moving the printhead and/or the medium in relation to one another, and a controller that controls how liquid is discharged from the individual nozzles of the printhead onto the medium in the form of pixels.

A typical printhead includes a plurality of nozzles aligned in one or more rows along a discharge surface of the printhead. Each nozzle is part of a "jetting channel", which includes the nozzle, a pressure chamber, and an actuator, such as a piezoelectric actuator. A printhead also includes a drive circuit that controls when each individual jetting channel fires based on image data. To jet from a jetting channel, the drive circuit provides a jetting pulse to the actuator, which causes the actuator to deform a wall of the pressure chamber. The deformation of the pressure chamber creates pressure waves within the pressure chamber that eject a droplet of print fluid (e.g., ink) out of the nozzle.

Drop on Demand (DoD) printing is moving towards higher productivity and quality, which requires small droplet sizes ejected at high jetting frequencies. The print quality delivered by a printhead depends on ejection or jetting characteristics, such as droplet velocity, droplet mass (or volume/diameter), jetting direction, etc. Unfortunately, air bubbles may be induced into the print fluid, which can negatively affect the jetting characteristics. Also, Temperature of the print fluid in the printhead may affect the jetting characteristics, so it is therefore desirable to control the temperature of the print fluid within a printhead.

EP0594110 A2 discloses an ink jet head with a plurality of ink liquid paths (102) in which energy generating elements are formed, a common liquid chamber (104) communicated with the plurality of ink liquid paths (102), and an air chamber (7) which is communicated with the common liquid chamber (104) via a communication section (8) formed at substantially a central portion of the air chamber (7) and which is formed along the longitudinal direction of the common liquid chamber (104). This arrangement of the ink jet head enables air in the air chamber (7) to act on refilling behavior of ink in each of the ink liquid paths (102) so that refilling in each of the ink liquid paths (102) is not delayed.

US 2010/073433 A1 discloses a head for ejecting a liquid from ejection holes, including: a first flow-passage member in which is formed a first liquid-supply passage; a second flow-passage member in which is formed a second liquid-supply passage connected to the first passage and which has outflow ports for dispensing the liquid from the second passage; a third flow-passage member in which are formed (a) at least one common liquid passage each communicating with at least one of the outflow ports and (b) individual liquid passages; and at least one energy giving member, wherein the first member, the second member, and the third member are superposed in this order on each other, and wherein the head further comprises a heater disposed between one surface of the first member that faces the second member and facing surface of the second member as one surface thereof that faces the first member.

### SUMMARY

The invention is defined in the claims. The disclosure described herein provides an enhanced printhead that is able to remove air/gas from a supply manifold in the printhead. A supply manifold in a printhead provides a fluid path for a print fluid between a fluid source and a row of jetting channels of the printhead. To remove air/gas from the print fluid, the printhead has a cavity proximate to the supply manifold, and a semi-permeable membrane disposed between the cavity and the supply manifold. As the print fluid flows through the supply manifold, air in the print fluid is able to escape through the semi-permeable membrane and into the cavity, while the print fluid is contained in the supply manifold by the semi-permeable membrane. A vacuum may be applied to the cavity to assist in drawing the air from the print fluid and through the semi-permeable membrane. Evacuation of the air from the print fluid advantageously allows for more consistent droplet formation by the jetting channels and higher print quality.

In addition, embodiments described herein provide an enhanced supply manifold in a printhead. A supply manifold in a printhead provides a fluid path for a print fluid between a fluid source and a row of jetting channels. For example, a supply manifold in a conventional printhead may comprise a groove in the main body of the printhead that is aligned with the row of jetting channels (i.e., aligned with restrictors of the jetting channels). The print fluid flows through the groove to each of the jetting channels. One limitation with this conventional design is that the print fluid may be at different temperatures along the length of the supply manifold, which can affect jetting characteristics along a row of jetting channels. For instance, the temperature of the print fluid may be lower towards the ends of the supply manifold as compared to the center of the supply manifold.

The enhanced supply manifold as described herein has a primary manifold duct and a secondary manifold duct that are fluidly connected via holes toward the center of the supply manifold. The structure of the supply manifold forces the print fluid to flow from the ends of the primary manifold duct toward the center of the primary manifold duct for at least a threshold distance before the print fluid is allowed to flow through to the second manifold duct. The print fluid may be heated while flowing through the primary manifold duct so that the print fluid reaches a threshold temperature before flowing into the second manifold duct. Thus, the print fluid that flows into the second manifold duct will be at a desired temperature for jetting, which allows for consistent droplet formation along a row of jetting channels and higher print quality.

### DESCRIPTION OF THE DRAWINGS

Some examples of the present disclosure are now described with reference to the accompanying drawings. The same reference number represents the same element or the same type of element on all drawings.
FIG. 1 is a perspective view of a printhead in an illustrative embodiment.
FIG. 2A is a schematic diagram of a row of jetting channels within a printhead in an illustrative embodiment.
FIG. 2B is a schematic diagram of a jetting channel within a printhead in an illustrative embodiment.
FIG. 3 illustrates an exploded, perspective view of a printhead in an illustrative embodiment.
FIG. 4 is a perspective view of a printhead in an illustrative arrangement.
FIG. 5 is a cross-sectional view of a printhead in an illustrative arrangement.
FIG. 6 is a cross-sectional view of a printhead showing a flow of print fluid in an illustrative arrangement.
FIG. 7 is an exploded, perspective view of a main body of a print head in an illustrative embodiment.
FIG. 8 is a cross-sectional view of a printhead in an illustrative embodiment.
FIG. 9 is a cross-sectional view of a printhead showing a flow of print fluid in an illustrative embodiment.

### DETAILED DESCRIPTION

The figures and the following description illustrate specific examples.

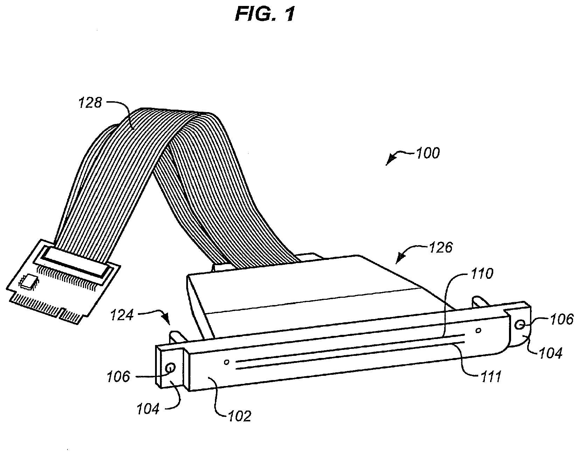

FIG. 1 is a perspective view of printhead 100 in an illustrative embodiment. Printhead 100 includes a nozzle plate 102, which represents the discharge surface of printhead 100. Nozzle plate 102 includes a plurality of nozzles that jet or eject droplets of print fluid onto a medium, such as paper, plastic, card stock, transparent sheets, a substrate for 3D printing, cloth, and the like. A print fluid is a liquid substance used for printing, such as ink, and may also be referred to as a print liquid. Nozzles of printheads 100 are arranged in one or more rows 110-111 so that ejection of print fluid from the nozzles causes formation of characters, symbols, images, layers of an object, etc., on the medium as printhead 100 and/or the medium are moved relative to one another. Although two rows 110-111 of nozzles are illustrated in FIG. 1, printhead 100 may include a single row of nozzles, three rows of nozzles, four rows of nozzles, etc. Printhead 100 also includes attachment members 104. Attachment members 104 are configured to secure printhead 100 to a jetting apparatus. Attachment members 104 may include one or more holes 106 so that printhead 100 may be mounted within a jetting apparatus by screws, bolts, pins, etc. Opposite nozzle plate 102 is the side of printhead 100 used for input/output (I/O) of print fluid, electronic signals, etc. This side of printhead 100 is referred to as the I/O side 124. I/O side 124 includes electronics 126 that connect to a controller board through cabling 128, such as a ribbon cable. Electronics 126 control how the nozzles of printhead 100 jet droplets in response to control signals provided by the controller board.

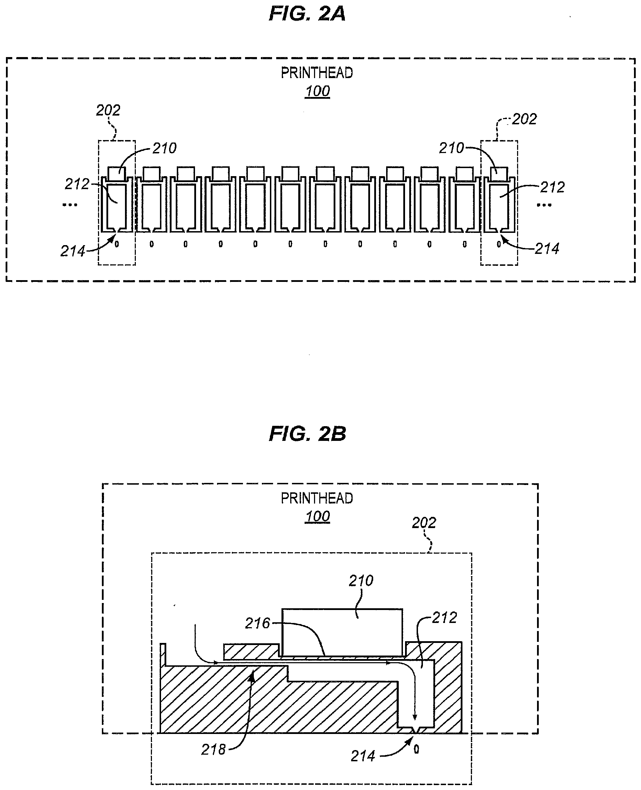

FIG. 2A is a schematic diagram of a row 110 of jetting channels 202 within printhead 100 in an illustrative embodiment. Printhead 100 includes multiple jetting channels 202 that are arranged in a line or row (e.g., row 110 in FIG. 2) along a length of printhead 100, and each jetting channel 202 in a row may have a similar configuration as shown in FIG. 2A. Each jetting channel 202 includes a piezoelectric actuator 210, a pressure chamber 212, and a nozzle 214. FIG. 2B is a schematic diagram of a jetting channel 202 within printhead 100 in an illustrative embodiment. The view in FIG. 2B is of a cross-section of jetting channel 202 across a width of printhead 100. The arrow in FIG. 2B illustrates a flow path of a print fluid within jetting channel 202. The print fluid flows from a supply manifold in printhead 100 and into pressure chamber 212 through restrictor 218. Restrictor 218 fluidly connects pressure chamber 212 to a supply manifold, and controls the flow of the print fluid into pressure chamber 212. One wall of pressure chamber 212 is formed with a diaphragm 216 that physically interfaces with piezoelectric actuator 210. Diaphragm 216 may comprise a sheet of semi-flexible material that vibrates in response to actuation by piezoelectric actuator 210. The print fluid flows through pressure chamber 212 and out of nozzle 214 in the form of a droplet in response to actuation by piezoelectric actuator 210. Piezoelectric actuator 210 is configured to receive a drive waveform, and to actuate or "fire" in response to a jetting pulse on the drive waveform. Firing of piezoelectric actuator 210 in jetting channel 202 creates pressure waves in pressure chamber 212 that cause jetting of a droplet from nozzle 214.

Jetting channel 202 as shown in FIGS. 2A-2B is an example to illustrate a basic structure of a jetting channel, such as the actuator, pressure chamber, and nozzle. Other types of jetting channels are also considered herein. Some jetting channels may have a pressure chamber having a different shape than is illustrated in FIGS. 2A and 2B. Some jetting channels may use another type of actuator other than a piezoelectric actuator.

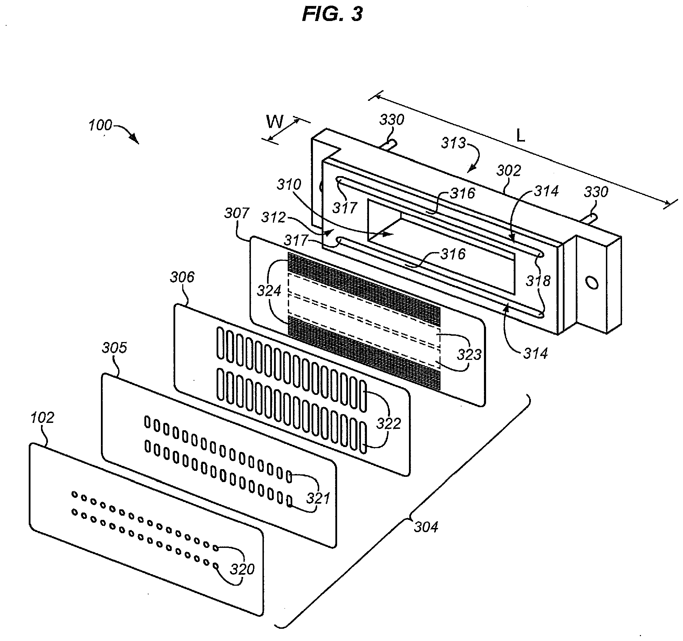

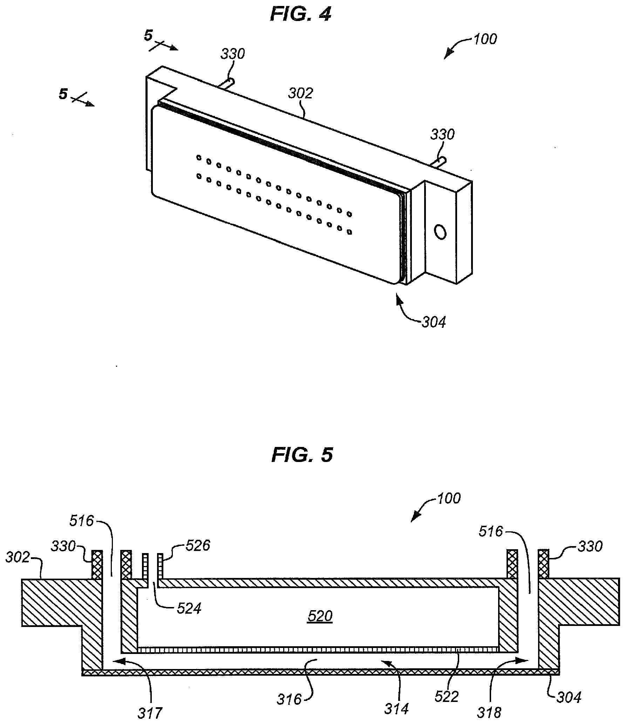

FIG. 3 illustrates an exploded, perspective view of printhead 100 in an illustrative embodiment. The illustration of printhead 100 in FIG. 3 is of a basic structure to show components of printhead 100, and the actual structure of printhead 100 may vary as desired. In this embodiment, printhead 100 is an assembly that includes a main body 302 and stack 304 of plates 102, 305-307 (also referred to as a laminate plate structure). Stack 304 is affixed or attached to main body 302, and forms one or more rows of jetting channels 202. FIG. 4 is a perspective view of printhead 100 in an illustrative embodiment. In FIG. 4, stack 304 is attached or affixed to main body 302.
In FIG. 3, main body 302 is an elongated member made from a rigid material, such as stainless steel. Main body 302 has a length (L) and a width (W), and the dimensions of main body 302 are such that the length is greater than the width. The direction of a row of jetting channels 202 corresponds with the length of main body 302. Main body 302 includes an access hole 310 at or near its center that extends from an interface surface 312 through to an opposing surface 313 (referred to as an inlet surface). Access hole 310 provides passage way for an actuator assembly (not shown), such as a plurality of piezoelectric actuators, to pass through and interface with a diaphragm plate 307. Interface surface 312 is the surface of main body 302 that faces stack 304, and interfaces with a plate (e.g., plate 307) of stack 304. Main body 302 includes one or more supply manifolds 314 that extend substantially along a length of main body 302, and are configured to supply a print fluid to jetting channels 202 of printhead 100. A supply manifold 314 includes a manifold duct 316, which comprises an elongated cut or groove along interface surface 312 of main body 302 that is configured to convey a print fluid. Manifold duct 316 extends along interface surface 312 from a first end 317 to a second end 318, and aligns with a row of jetting channels 202. The length of manifold duct 316 may be at least as long as a row of jetting channels 202 in printhead 100.

Main body 302 also includes one or more supply ports 330 on inlet surface 313 that are configured to receive a print fluid from a fluid supply. For example, supply ports 330 may be connected to a fluid reservoir via hoses to receive print fluid from the fluid reservoir. Supply ports 330 are separated by a distance along a length of main body 302, such as on opposing sides of access hole 310. Supply manifold 314 is configured to provide a fluid path for the print fluid from supply ports 330 to the row of jetting channels 202, and the structure of supply manifold 314 is described in more below. Although not visible in FIG. 3, supply manifold 314 also includes fluid passages that extend between supply ports 330 and manifold duct 316. A fluid passage is a hole or opening that fluidly couples supply port 330 to manifold duct 316. Although multiple supply ports 330 are illustrated in this embodiment, a single supply port 330 may supply print fluid to supply manifold 314 in other embodiments.

In FIG. 3, plates 102 and 305-307 of printhead 100 are fixed, bonded, or otherwise attached to one another to form stack 304, and stack 304 is affixed to main body 302. Stack 304 includes the following plates in this embodiment: nozzle plate 102, a chamber plate 305, a restrictor plate 306, and a diaphragm plate 307. Nozzle plate 102 includes one or more rows of nozzle openings 320 that form the nozzles 214 of jetting channels 202. Chamber plate 305 includes one or more rows of chamber openings 321 that form pressure chambers 212 of jetting channels 202. Although one chamber plate 305 is illustrated, there may be multiple chamber plates 305 used to form pressure chambers 212. Restrictor plate 306 is formed with a plurality of restrictor openings 322 that form restrictors 218 of jetting channels 202. Restrictor openings 322 fluidly connect supply manifold 314 to chamber openings 321, and control the flow of print fluid into chamber openings 321. Diaphragm plate 307 is formed with diaphragm sections 323 and filter sections 324. Diaphragm sections 323 each comprise a sheet of semi-flexible material that forms diaphragms 216 for jetting channels 202. Filter sections 324 remove foreign matter from the print fluid entering into restrictor openings 322. As stated above, the assembly of printhead 100 may include more or different plates than are illustrated in FIG. 3.

FIG. 5 is a cross-sectional view of printhead 100 in an illustrative arrangement. The cross-section shown in FIG. 5 is along view arrows 5-5 in FIG. 4. Through this cross-sectional view, the elements of supply manifold 314 are visible. Supply manifold 314 is formed by manifold duct 316 of main body 302 that extends (left to right in FIG. 5) between ends 317-318. Supply manifold 314 is also formed by fluid passages 516 that fluidly couple supply ports 330 to opposing ends 317-318 of manifold duct 316. Thus, print fluid is supplied to manifold duct 316 at opposing ends 317-318 in this arrangement. Manifold duct 316 is a conduit for the print fluid to flow. The bottom portion of manifold duct 316 in FIG. 5 is open to the jetting channels 202 formed by stack 304. Thus, manifold duct 316 is the portion of supply manifold 314 that delivers the print fluid to the jetting channels 202.

Printhead 100 is enhanced in this arrangement with an air removal structure that assists in removing air from print fluid that flows within manifold duct 316. For the air removal structure, main body 302 includes a cavity 520, which comprises an empty space within main body 302 that is fluidly isolated from supply manifold 314. Cavity 520 is shown above manifold duct 316 in FIG. 5, but may be orientated on one or more sides of manifold duct 316. Main body 302 also includes a semi-permeable membrane 522 installed or disposed between supply manifold 314 and cavity 520. A semi-permeable membrane 522, which may also be referred to as an air-permeable or gas-permeable membrane, comprises a barrier, layer, plate, or sheet of material that is permeable to air or gas (i.e., allows air or gas to pass through it), and is impermeable to liquid or fluids (i.e., does not allow a fluid, such as a print fluid, to pass through it). For example, semi-permeable membrane 522 may comprise a thin plate or sheet of metallic material, such as Nickel, having very small holes, pores, or openings, such as in the range of 10-20 microns. Semi-permeable membrane 522 may be coated with a non-wetting coating. Semi-permeable membrane 522 may physically separate manifold duct 316 from cavity 520 along the entire length of manifold duct 316 so that no print fluid is allowed to pass into cavity 520. It is noted that references to a "fluid" herein refer to a liquid substance and not a gas.

In one arrangement, main body 302 may also include an air vent 524 coupled to cavity 520. Air vent 524 is configured to expel air that accumulates within cavity 520. Main body 302 may also include a vacuum port 526 coupled to air vent 524. Vacuum port 526 is configured to connect to a vacuum source (not shown) to draw or create a negative pressure or vacuum within cavity 520.

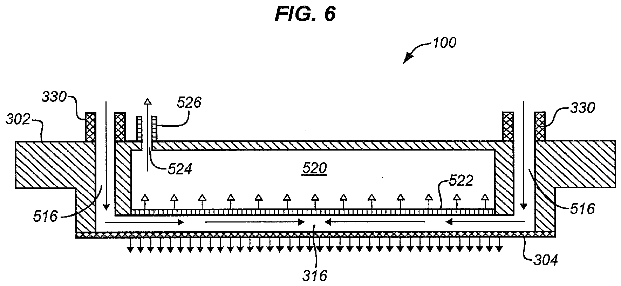

FIG. 6 is a cross-sectional view of printhead 100 showing a flow of print fluid in an illustrative arrangement. The print fluid is received at supply ports 330, and flows through fluid passages 516 into manifold duct 316. The print fluid flows from the ends of manifold duct 316 toward a center of manifold duct 316. As the print fluid flows through manifold duct 316, air in the print fluid will escape through semi-permeable membrane 522 into cavity 520. At the same time, semi-permeable membrane 522 does not allow the print fluid to pass into cavity 520. The air that accumulates within cavity 520 may be expelled through air vent 524. If a vacuum source is attached to vacuum port 526, then a negative pressure or a vacuum is created within cavity 520. The vacuum in cavity 520 assists in drawing air out of the print fluid flowing in manifold duct 316, through semi-permeable membrane 522, into cavity 520 and out air vent 524. The amount of negative pressure may high enough to draw air through semi-permeable membrane 522, but low enough to avoid drawing the print fluid through semi-permeable membrane 522.

The air removal structure in printhead 100 assists in removing air or gas bubbles that form in a print fluid. Air trapped in the print fluid can affect the jetting characteristics of the jetting channels 202 resulting in lower print quality. By removing air from the print fluid that flows in supply manifold 314, the print fluid supplied to the jetting channels 202 will be free or substantially free of air or gas bubbles. One technical benefit is that jetting of the print fluid by the jetting channels 202 will be more reliable and consistent, which results in higher print quality. Another benefit of the air removal structure is that it can act to dampen pressure waves generated by jetting operations. Semi-permeable membrane 522 may have some flexibility (e.g., when comprising a thin plate or membrane) and fluid menisci may form in the pores or openings in semi-permeable membrane 522. Both of these characteristics act to dampen pressure waves generated by jetting operations.

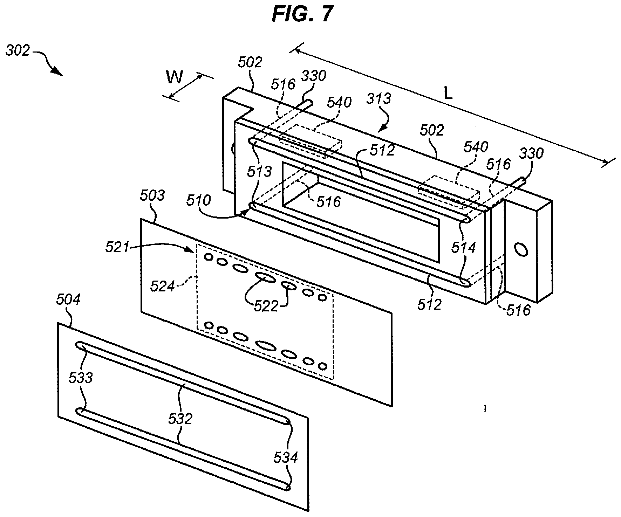

FIG. 7 is an exploded, perspective view of main body 302 in an illustrative embodiment. In this embodiment, main body 302 includes a body member 502, a flow diversion plate 503, and a manifold plate 504. The structure of body member 502, flow diversion plate 503, and manifold plate 504 form the supply manifold 314 as illustrated in FIG. 3. When connected, flow diversion plate 503 is sandwiched between manifold plate 504 and an interface surface 510 of body member 502. Other plates may be used for main body 302 that are not shown for the sake of brevity, such as a spacer plate, multiple manifold plates 504, etc.

Body member 502 is an elongated member made from a rigid material, such as stainless steel. Body member 502 has a length (L) and a width (W), and the dimensions of body member 502 are such that the length is greater than the width. The direction of a row of jetting channels 202 corresponds with the length of body member 502. To form the supply manifold 314 that supplies a print fluid to a row of jetting channels 202, body member 502 includes one or more primary manifold ducts 512 on interface surface 510. Primary manifold duct 512 is an elongated cut or groove configured to convey a print fluid. Primary manifold duct 512 extends along interface surface 510 from a first end 513 to a second end 514. The length of primary manifold duct 512 may be at least as long as a row of jetting channels 202 in printhead 100. Body member 502 also includes fluid passages 516 that extend between primary manifold duct 512 and a supply port 330. A fluid passage 516 is a hole or opening that fluidly couples supply port 330 to primary manifold duct 512. In the embodiment, there is a fluid passage 516 toward each end 513-514 of primary manifold duct 512. One or more heaters 540 are embedded in body member 502 proximate to primary manifold duct 512. A heater 540 is configured to heat the print fluid in primary manifold duct 512. Body member 502 may comprise a unibody structure, with primary manifold duct 512 and fluid passages 516 machined, milled, etched, or otherwise formed into the unibody structure.

To further form supply manifold 314, flow diversion plate 503 includes one or more rows 521 of orifices 522. A row 521 of orifices 522 is aligned with a primary manifold duct 512 on body member 502. An orifice 522 is a hole through flow diversion plate 503 that provides a pathway for print fluid. Manifold plate 504 includes one or more secondary manifold ducts 532 aligned with a primary manifold duct 512 on body member 502. A secondary manifold duct 532 is an elongated slot, cut, groove, or opening in manifold plate 504 configured to convey a print fluid. Secondary manifold duct 532 extends from a first end 533 to a second end 534 along a length of manifold plate 504. Secondary manifold duct 532 is the portion of supply manifold 314 that is fluidly coupled to the row of jetting channels 202 in printhead 100 for supplying a print fluid. Thus, the length of secondary manifold duct 532 may be at least as long as the row of jetting channels 202.

When flow diversion plate 503 and manifold plate 504 are affixed to body member 502, primary manifold duct 512 and secondary manifold duct 532 extend in parallel (in alignment with the row of jetting channels 202 when stack 304 is attached). Flow diversion plate 503 is configured to fluidly isolate secondary manifold duct 532 from primary manifold duct 512 at end sections, and to fluidly couple or fluidly connect secondary manifold duct 532 to primary manifold duct 512 toward a midsection. This, in effect, would cause a print fluid to flow through a length of primary manifold duct 512 before flowing through flow diversion plate 503 and into secondary manifold duct 532, as opposed to flowing directly from primary manifold duct 512 to secondary manifold duct 532 along their entire lengths. To divert the flow of print fluid, the positioning of orifices 522 in row 521 is selected so that a print fluid has to flow through a length of primary manifold duct 512. In the embodiment, orifices 522 in row 521 are formed toward a midsection 524 of flow diversion plate 503, and are not formed toward end sections of flow diversion plate 503. A spacing between orifices 522 at opposing ends of row 521 defines a length of row 521, and the length of row 521 is less than a length of primary manifold duct 512. With this configuration, a print fluid is forced to flow within primary manifold duct 512 before reaching the nearest orifice 522 at the end of row 521. Also, the pattern of orifices 522 in row 521 may be selected to further divert the flow of print fluid out of primary manifold duct 512. For example, the sizes of orifices 522 in row 521 may vary depending on their position in row 521. In the embodiment, the sizes of orifices 522 decrease from a middle of row 521 to ends of row 521. For instance, the middle orifice(s) 522 in row 521 have the largest size, and the size of orifices 522 decreases from the middle orifice(s) 522 toward the end orifices 522. The shape of orifices 522 may vary also within row 521. Some orifices 522 may have an elliptical shape, some may have a circular shape, etc.

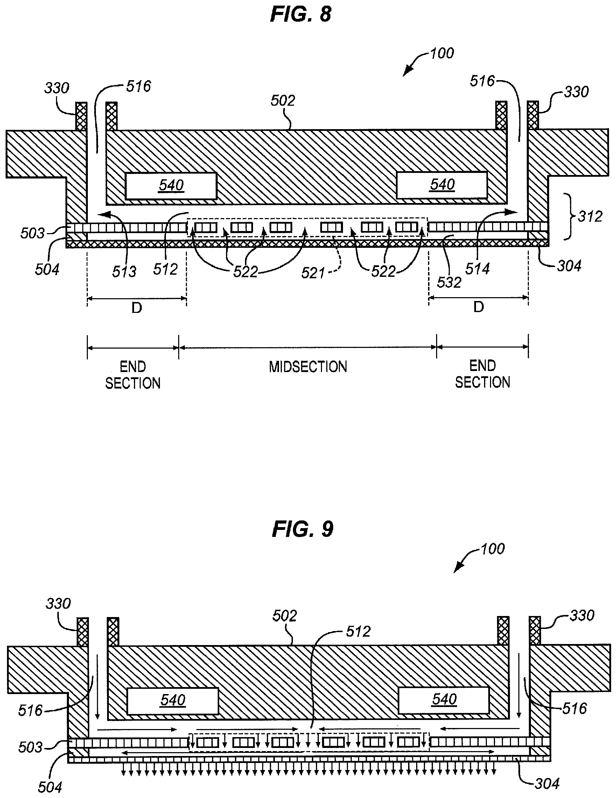

FIG. 8 is a cross-sectional view of printhead 100 in the embodiment. The cross-section shown in FIG. 8 is along view arrows 6-6 in FIG. 4. Through this cross-sectional view, the elements of supply manifold 314 are visible. Body member 502 includes primary manifold duct 512 that extends (left to right in FIG. 8) between ends 513-514. Body member 502 also includes fluid passages 516 that fluidly couple supply ports 330 to opposing ends 513-514 of primary manifold duct 512. Thus, print fluid is supplied to primary manifold duct 512 at opposing ends 513-514 in the embodiment. Heaters 540 are also shown as being embedded in body member 502. Manifold plate 504 forms secondary manifold duct 532. Fluid diversion plate 503 is sandwiched between manifold plate 504 and body member 502, and includes a row 521 of orifices 522. In this cross-section, a midsection of a length of body member 502, plates 503-504, primary manifold duct 512, secondary manifold duct 532, etc., are shown. In the elongated elements discussed herein, the midsection is a section toward or centered about the middle of a length of a structure or body. The end sections are separated by the midsection along the length. In the embodiment, orifices 522 are positioned toward the midsection of the length of primary manifold duct 512, and no orifices 522 are positioned toward the end sections of the length of primary manifold duct 512. More particularly, row 521 has "end" orifices 522 that are at the ends of row 521. The end orifices 522 are nearest the ends 513-514 of primary manifold duct 512. The end orifices 522, which are nearest end 513-514 of primary manifold duct 512, are separated from ends 513-514 by a threshold distance, respectively. For example, the distance between an end 513-514 of primary manifold duct 512 and an end orifice 522 is indicated by "D", and the distance D is selected to be greater than the threshold distance. The threshold distance may be selected based on a heating time of the print fluid in primary manifold duct 512 due to heaters 540. Because heaters 540 are embedded proximate to primary manifold duct 512, the print fluid is heated as it flows through primary manifold duct 512. The longer the print fluid flows through primary manifold duct 512, the more the print fluid is heated. Thus, the distance D may be selected so that the print fluid is forced to flow at least the threshold distance through primary manifold duct 512. Also, the size of orifices 522 increases in size from end orifices 522 to a center orifice 522. Thus, the majority of print fluid will flow past the end orifices 522 and toward the center of primary manifold duct 512 where the orifices 522 are larger. This allows the print fluid to flow longer within primary manifold duct 512, which provides further heating time.

FIG. 9 is a cross-sectional view of printhead 100 showing a flow of print fluid in the embodiment. The print fluid is received at supply ports 330, and flows through fluid passages 516 into primary manifold duct 512. The print fluid flows from ends 513-514 of primary manifold duct 512 toward the center of primary manifold duct 512. As the print fluid flows through primary manifold duct 512, the print fluid will flow through orifices 522 in fluid diversion plate 503 and into secondary manifold duct 532. The print fluid will then flow through secondary manifold duct 532 to supply the jetting channels 202 with the print fluid for jetting. As is evident in FIG. 9, the print fluid is forced to flow at least a threshold distance within primary manifold duct 512 before it is allowed to flow through to secondary manifold duct 532. Thus, the print fluid is allowed time to increase in temperature via heaters 540 while flowing through primary manifold duct 512, which can improve performance.

## Claims

1. A printhead (100) comprising:
a main body (302); and
a stack of plates (304) attached to the main body, that form a row of jetting channels (202) configured to jet droplets of a print fluid;
wherein the main body includes:
a supply manifold (314) configured to provide a fluid path for the print fluid to the row of jetting channels;
wherein the supply manifold comprises a primary manifold duct (512) and a secondary manifold duct (532) that extend in parallel in alignment with the row of jetting channels;
a fluid diversion plate (503) disposed between the primary manifold duct (512) and the secondary manifold duct (532) and that fluidly isolates the primary manifold duct from the secondary manifold duct at the end sections of the primary manifold duct;
wherein the print fluid is supplied at each end section of the primary manifold duct and the secondary manifold duct is fluidly coupled to the row of jetting channels;
**characterised in that** the fluid diversion plate includes a plurality of orifices (522) in a row aligned with the primary manifold duct and the secondary manifold duct, positioned toward the midsection of the length of the primary manifold duct, that fluidly couple the primary manifold duct to the secondary manifold duct;
wherein the main body comprises one or more heaters (540) embedded in the main body proximate to primary manifold duct;
wherein the plurality of orifices increase in size from orifices at either end of the plurality of orifices to a centre orifice.

2. The printhead of claim 1, wherein the main body further includes:
a rigid body member (502); and
a manifold plate (504);
wherein the flow diversion plate (503) is sandwiched between an interface surface of the rigid body member and the manifold plate;
wherein the rigid body member includes the primary manifold duct (512) formed into the interface surface;
wherein the manifold plate includes a manifold opening that forms the secondary manifold duct in alignment with the primary manifold duct.

3. The printhead of claims 1 or 2, wherein the main body (302) has supply ports (330) configured to receive the print fluid;
wherein the supply manifold (314) is configured to provide the fluid path for the print fluid from the supply ports to the row of jetting channels;
wherein the supply manifold includes
a first fluid passage (516) that fluidly couples to a first one of the supply ports;
a second fluid passage (516) that fluidly couples to a second one of the supply ports, wherein the first one of the supply ports and the second one of the supply ports are separated by a distance along a length of the main body;
wherein the primary manifold duct (512) extends between the first fluid passage and the second fluid passage.

## Patentansprüche

1. Druckkopf (100), der Folgendes umfasst:
einen Hauptkörper (302); und
einen Stapel von Platten (304), die an dem Hauptkörper befestigt sind und eine Reihe von Düsenkanälen (202) bilden, die konfiguriert sind, um Tröpfchen eines Druckfluids auszustoßen;
wobei der Hauptkörper Folgendes umfasst:
einen Zufuhrverteiler (314), der konfiguriert ist, um der Reihe von Düsenkanälen einen Fluidpfad für das Druckfluid bereitzustellen;
wobei der Zufuhrverteiler ein erstes Verteilerrohr (512) und ein zweites Verteilerrohr (532) umfasst, die sich parallel zu der Reihe von Düsenkanälen erstrecken;
eine Fluidumleitungsplatte (503), die zwischen dem ersten Verteilerrohr (512) und dem zweiten Verteilerrohr (532) angeordnet ist und die das erste Verteilerrohr an den Endabschnitten des ersten Verteilerrohrs fluidisch von dem zweiten Verteilerrohr isoliert;
wobei das Druckfluid an jedem Endabschnitt des ersten Verteilerrohrs zugeführt wird und das zweite Verteilerrohr fluidisch mit der Reihe von Düsenkanälen gekoppelt ist;
**dadurch gekennzeichnet, dass** die Fluidumleitungsplatte eine Vielzahl von Öffnungen (522) umfasst, die in einer Reihe mit dem ersten Verteilerrohr und dem zweiten Verteilerrohr ausgerichtet sind und in Richtung des Mittelteils der Länge des ersten Verteilerrohrs positioniert sind und das erste Verteilerrohr fluidisch mit dem zweiten Verteilerrohr koppeln;
wobei der Hauptkörper ein oder mehrere Heizgeräte (540) umfasst, die in den Hauptkörper in der Nähe des ersten Verteilerrohrs eingebettet sind;
wobei die Größe der Vielzahl von Öffnungen von den Öffnungen an einem der Enden der Vielzahl von Öffnungen zu einer Öffnung in der Mitte hin zunimmt.

2. Druckkopf nach Anspruch 1, wobei der Hauptkörper ferner Folgendes umfasst:
ein steifes Körperelement (502); und
eine Verteilerplatte (504);
wobei sich die Fluidumleitungsplatte (503) zwischen einer Grenzfläche des steifen Körperelements und der Verteilerplatte befindet;
wobei das steife Körperelement das erste Verteilerrohr (512) umfasst, das in der Grenzfläche gebildet ist;
wobei die Verteilerplatte eine Verteileröffnung umfasst, die das zweite Verteilerrohr in Ausrichtung mit dem ersten Verteilerrohr bildet.

3. Druckkopf nach Anspruch 1 oder 2, wobei der Hauptkörper (302) Zufuhranschlüsse (330) aufweist, die konfiguriert sind, um das Druckfluid aufzunehmen;
wobei der Zufuhrverteiler (314) konfiguriert ist, um den Fluidweg für das Druckfluid von den Zufuhranschlüssen zu der Reihe von Düsenkanälen bereitzustellen;
wobei der Zufuhrverteiler Folgendes umfasst:
einen ersten Fluidkanal (516), der fluidisch an einen ersten der Zufuhranschlüsse koppelt;
einen zweiten Fluidkanal (516), der fluidisch an einen zweiten der Zufuhranschlüsse koppelt, wobei der erste der Zufuhranschlüsse und der zweite der Zufuhranschlüsse durch eine Entfernung entlang der Länge des Hauptkörpers getrennt sind;
wobei sich das erste Verteilerrohr (512) zwischen dem ersten Fluidkanal und dem zweiten Fluidkanal erstreckt.

## Revendications

1. Tête d'impression (100) comprenant :
un corps principal (302) ;
un empilement de plaques (304) attachées au corps principal, qui forment une rangée de canaux de projection (202) configurés pour projeter des gouttelettes d'un fluide d'impression ;
dans laquelle le corps principal comporte :
un collecteur d'alimentation (314) configuré pou fournir un trajet fluidique pour le fluide d'impression vers la rangée de canaux de projection ;
dans laquelle le collecteur d'alimentation comprend un conduit de collecteur primaire (512) et un conduit de collecteur secondaire (532) qui s'étendent en alignement avec la rangée de canaux de projection ;
une plaque de diversion de fluide (503) disposée entre le conduit de collecteur primaire (512) et le conduit de collecteur secondaire (532) et qui isole fluidiquement le conduit de collecteur primaire du conduit de collecteur secondaire au niveau des sections terminales du conduit de collecteur primaire ;
dans laquelle le fluide d'impression est fourni au niveau de chaque section terminale du conduit de collecteur primaire et le conduit de collecteur secondaire est couplé fluidiquement à rangée de canaux de projection ;
**caractérisée en ce que** la plaque de diversion de fluide comporte une pluralité d'orifices (522) en une rangée alignée avec le conduit de collecteur primaire et le conduit de collecteur secondaire, positionnés vers la section médiane de la longueur du conduit de collecteur primaire, qui couplent fluidiquement le conduit de collecteur primaire au conduit de collecteur secondaire ;
dans laquelle le corps principal comprend au moins un élément chauffant (540) incorporé dans le corps principal à proximité du conduit de collecteur primaire ;
dans laquelle la pluralité d'orifices augmentent en taille à partir d'orifices à chaque extrémité de la pluralité d'orifices jusqu'à un orifice central.

2. Tête d'impression selon la revendication 1, dans laquelle le corps principal comprend en outre :
un organe de corps rigide (502) ; et
une plaque de collecteur (504) ;
dans laquelle la plaque de diversion d'écoulement (503) est intercalée entre une surface d'interface de l'organe de corps rigide et la plaque de collecteur ;
dans laquelle l'organe de corps rigide comporte le conduit de collecteur primaire (512) formé dans la surface d'interface ;
dans laquelle la plaque de collecteur comporte une ouverture de collecteur qui forme le conduit de collecteur secondaire en alignement avec le conduit de collecteur primaire.

3. Tête d'impression selon les revendications 1 ou 2, dans laquelle le corps principal (302) a des trous d'alimentation (330) configurés pour recevoir le fluide d'impression ;
dans laquelle le collecteur d'alimentation (314) est configuré pour fournir le trajet fluidique pour le fluide d'impression à partie des trous d'alimentation jusqu'à la rangée de canaux de projection ;
dans laquelle le collecteur d'alimentation comporte
un premier passage fluidique (516) qui se couple fluidiquement à un premier des trous d'alimentation ;
un deuxième passage fluidique (516) qui se couple fluidiquement à un deuxième des trous d'alimentation, dans laquelle le premier des trous d'alimentation et le deuxième des trous d'alimentation sont séparés d'une distance suivant une longueur du corps principal ;
dans laquelle le conduit de collecteur primaire (512) s'étend entre le premier passage fluidique et le deuxième passage fluidique.
